(19) **Europäisches Patentamt** / **European Patent Office** / **Office européen des brevets**

(11) **EP 4 187 445 B1**

(12) **FASCICULE DE BREVET EUROPEEN**

(45) Date de publication et mention de la délivrance du brevet:
**07.01.2026 Bulletin 2026/02**

(21) Numéro de dépôt: **22209173.8**

(22) Date de dépôt: **23.11.2022**

(51) Classification Internationale des Brevets (IPC):
**G06N 3/0495** (2023.01)   **G06N 3/084** (2023.01)
**G06N 3/048** (2023.01)   **G06N 3/063** (2023.01)
**G06N 3/0464** (2023.01)

(52) Classification Coopérative des Brevets (CPC):
**G06N 3/084; G06N 3/0495;** G06N 3/0464;
G06N 3/048; G06N 3/063

(54) **PROCÉDÉ D'APPRENTISSAGE DE VALEURS DE POIDS SYNAPTIQUE D'UN RÉSEAU DE NEURONES, PROCÉDÉ DE TRAITEMENT DE DONNÉES, PROGRAMME D'ORDINATEUR, CALCULATEUR ET SYSTÈME DE TRAITEMENT ASSOCIÉS**

VERFAHREN ZUM LERNEN VON SYNAPTISCHEN GEWICHTSWERTEN EINES NEURONALEN NETZWERKS, DATENVERARBEITUNGSVERFAHREN, COMPUTERPROGRAMM, RECHNER UND VERARBEITUNGSSYSTEM DAFÜR

METHOD FOR LEARNING SYNAPTIC WEIGHT VALUES OF A NEURAL NETWORK, DATA PROCESSING METHOD, ASSOCIATED COMPUTER PROGRAM, CALCULATOR AND PROCESSING SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **24.11.2021 FR 2112441**

(43) Date de publication de la demande:
**31.05.2023 Bulletin 2023/22**

(73) Titulaire: **Commissariat à l'Energie Atomique et aux Energies Alternatives**
**75015 Paris (FR)**

(72) Inventeurs:
 • **KUCHER, Inna**
 **91191 Gif sur Yvette Cedex (FR)**
 • **BRIAND, David**
 **91191 Gif sur Yvette Cedex (FR)**
 • **BICHLER, Olivier**
 **91191 Gif sur Yvette Cedex (FR)**

(74) Mandataire: **Lavoix**
**2, place d'Estienne d'Orves**
**75441 Paris Cedex 09 (FR)**

(56) Documents cités:
**WO-A1-2020/256836    CN-A- 113 420 788**
**US-A1- 2022 114 413**

• **BENOIT JACOB ET AL: "Quantization and Training of Neural Networks for Efficient Integer-Arithmetic-Only Inference", ARXIV.ORG, CORNELL UNIVERSITY LIBRARY, 201 OLIN LIBRARY CORNELL UNIVERSITY ITHACA, NY 14853, 16 December 2017 (2017-12-16), XP080846617**
• **ALLENET THIBAULT ET AL: "Disentangled Loss for Low-Bit Quantization-Aware Training", 19 June 2022 (2022-06-19), pages 1 - 5, XP055945289, Retrieved from the Internet <URL:https://openaccess.thecvf.com/content/ CVPR2022W/ECV/papers/ Allenet_Disentangled_Loss_for_Low-Bit_Quanti zation-Aware_Training_CVPRW_2022_paper. pdf> [retrieved on 20220722]**

**Description**

La présente invention concerne un procédé d'apprentissage de valeurs de poids synaptique d'au moins une couche d'un réseau de neurones artificiels, selon la revendication 1.

L'invention a également pour objet un procédé de traitement de données selon la revendication 11.

L'invention a aussi pour objet un programme d'ordinateur selon la revendication 12.

L'invention a également pour objet un calculateur électronique de traitement de données selon la revendication 13.

L'invention concerne le domaine de l'apprentissage de réseaux de neurones artificiels, aussi notés ANN (de l'anglais *Artificial Neural Networks*), également appelés réseaux neuronaux. Les réseaux de neurones artificiels sont par exemple des réseaux de neurones convolutifs, aussi notés CNN (de l'anglais *Convolutional Neural Networks*), des réseaux de neurones récurrents, tels que des réseaux récurrents à mémoire court-terme et long terme, également notés LTSM (de l'anglais *Long Short-Term Memory*), ou encore des réseaux de neurones transformeurs (de l'anglais *Transformers*), utilisés typiquement dans le domaine du traitement automatique des langues (TAL).

L'invention concerne aussi le domaine de calculateurs, également appelé puces, électroniques de mise en œuvre de tels réseaux de neurones, ces calculateurs électroniques permettant d'utiliser le réseau de neurones lors d'une phase d'inférence, après une phase préalable d'apprentissage du réseau de neurones à partir de données d'apprentissage, la phase d'apprentissage étant typiquement mise en œuvre par ordinateur.

Une technique connue permettant une diminution significative d'une empreinte mémoire lors de la phase d'apprentissage est basée sur la quantification du réseau. La quantification consiste à réduire le nombre de bits utilisés pour coder chaque poids synaptique, de sorte que l'empreinte mémoire totale soit réduite du même facteur.

L'article *"Quantization and Training of Neural Networks for Efficient Integer-Arithmetic-Only Inference"* de B. Jacob décrit un schéma de quantification permettant de mettre en œuvre une inférence du réseau avec des nombres entiers.

L'article « Towards Efficient Training for Neural Network Quantization » de Q. Jin et al décrit un procédé d'apprentissage du type précité, avec une quantification des valeurs de poids synaptique, ce procédé également appelé SAT (de l'anglais *Scale-Adjusted Training*) permettant la compression des poids et des activations sur un nombre réduit de niveaux d'états représentables sur un nombre prédéfini de bits, typiquement au plus 8 bits.

Pendant l'apprentissage, les poids et activations sont représentés en virgule flottante et sur l'intervalle [-1,1] pour les poids et l'intervalle [0,+∞] pour les activations lorsque la fonction d'activation est du type rectification linéaire, également noté ReLU (de l'anglais *Rectified Linear Unit*) (ou l'intervalle [0, $\underline{\alpha}$] pour les activations quantifiées avec la methode SAT). L'algorithme de quantification des poids utilisé par la méthode SAT est décrit dans l'article « DoReFa-Net: Training Low Bitwidth Convolutional Neural Networks with Low Bitwidth Gradients » de S. Zhou et al, également appelé algorithme DoReFa.

Cependant, les résultats obtenus avec un tel procédé sont insuffisants lorsque le réseau de neurones est mis en œuvre avec des opérateurs entiers et/ou en virgule fixe et des registres entiers et/ou en virgule fixe.

Le but de l'invention est alors de proposer un procédé d'apprentissage d'un réseau de neurones permettant ensuite une inférence dudit réseau avec des opérateurs entiers et/ou en virgule fixe et des registres entiers et/ou en virgule fixe.

A cet effet, l'invention a pour objet un procédé d'apprentissage de valeurs de poids synaptique d'au moins une couche d'un réseau de neurones artificiels, selon la revendication 1.

Le procédé d'apprentissage selon l'invention permet alors d'effectuer la somme pondérée de valeur(s) d'entrée, puis d'appliquer la fonction d'activation à la somme pondérée via des opérateurs entiers et/ou en virgule fixe et des registres entiers et/ou en virgule fixe, sans compromettre les performances acquises pendant l'apprentissage. En comparaison, avec le procédé d'apprentissage de l'état de la technique, les résultats obtenus pour un tel calcul avec registres entiers et/ou en virgule fixe sont trop médiocres pour qu'il puisse être mis en œuvre, ledit calcul devant alors être mis en œuvre avec des opérateurs et registres en virgule flottante.

La quantification selon l'invention permet alors d'utiliser un encodage en virgule fixe, plutôt qu'en virgule flottante. En d'autres termes, les opérations peuvent être effectuées en utilisant des types de données entiers, plutôt que flottants. Ceci permet une implémentation beaucoup plus efficace de l'inférence du réseau de neurones, car les opérations en nombres entiers nécessitent beaucoup moins de calculs sur la plupart des cœurs de processeurs, y compris les microcontrôleurs.

De préférence, selon l'invention, l'ensemble de valeurs quantifiées inclut la valeur nulle, alors que l'algorithme DoReFa de quantification utilise une quantification uniforme centrée sur zéro, sans pour autant inclure la valeur nulle. L'algorithme DoReFa de l'état de la technique implique que tout poids quantifié est soit positif, soit négatif. En outre, l'algorithme DoReFa doit utiliser un encodage de type A\*x+B pour représenter la valeur, et le décalage lié à la constante B engendre en outre des opérations supplémentaires dans une architecture de type matériel, ou du temps supplémentaire de calcul dans une architecture de type logiciel.

Suivant d'autres aspects avantageux de l'invention, le procédé d'apprentissage est selon l'une quelconque des revendications 2 à 10.

L'invention a également pour objet un procédé de traitement de données, notamment de classification de données, selon la revendication 11.

L'invention a aussi pour objet un programme d'ordinateur selon la revendication 12.

L'invention a également pour objet un calculateur électronique de traitement de données, notamment de classification de données, selon la revendication 13.

Suivant un autre aspect avantageux de l'invention, le calculateur est selon la revendication 14.

L'invention a aussi pour objet un système électronique de traitement d'objet(s), selon la revendication 15.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique de traitement d'objets selon l'invention, comprenant un capteur, et un calculateur électronique connecté au capteur, le calculateur étant configuré pour traiter, via la mise en œuvre d'un réseau de neurones artificiels, au moins un objet issu du capteur ;
- la figure 2 est une représentation schématique d'un ensemble de valeurs quantifiées sur 4 bits de l'état de la technique, utilisé pour un apprentissage des valeurs de poids du réseau de neurones ;
- la figure 3 est une vue analogue à celle de la figure 2, pour deux exemples selon l'invention ; et
- la figure 4 est un organigramme d'un procédé, selon invention, de traitement de données, notamment de classification de données, le procédé étant mis en œuvre par le calculateur électronique de la figure 1, implémentant le réseau de neurones artificiels.

Dans la présente description, sauf autre précision, les expressions « sensiblement », « environ », « approximativement » et « de l'ordre de » définissent une relation d'égalité à plus ou moins 10%, de préférence à plus ou moins 5%.

Dans la présente description, les termes « apprentissage » (de l'anglais *learning*) et « entraînement » (de l'anglais *training*) sont considérés comme équivalents, c'est-à-dire qu'ils ont la même signification, et sont alors employés de manière interchangeable.

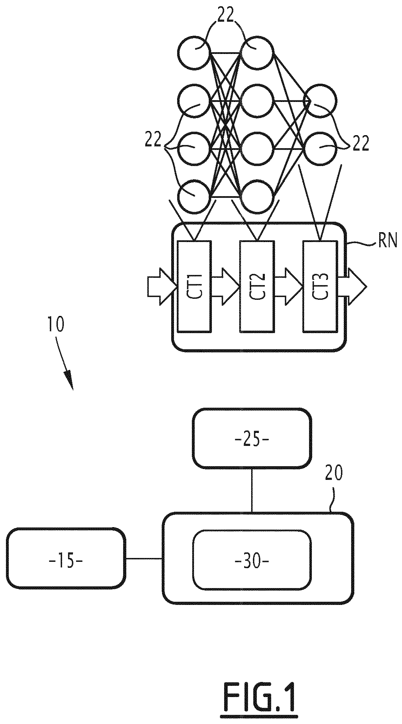

Sur la figure 1, un système électronique 10 de traitement d'objet(s) est configuré pour traiter un ou plusieurs objets, non représentés, et comprend un capteur 15 et un calculateur électronique 20 connecté au capteur 15, le calculateur 20 étant configuré pour traiter au moins un objet issu du capteur 15.

Le système électronique de traitement 10 est par exemple un système électronique de détection d'objet(s), le capteur 15 étant alors un détecteur d'objet(s) et le calculateur 20 étant configuré pour traiter au moins un objet détecté par le détecteur d'objet(s).

Le système électronique de traitement 10 forme par exemple un détecteur de visages apte à reconnaitre les visages de personnes préalablement identifiées et/ou à détecter des visages de personnes inconnues, c'est-à-dire des visages de personnes qui n'ont pas été préalablement identifiées. Le calculateur 20 permet alors d'apprendre les identités des personnes détectées, et aussi d'identifier des personnes inconnues.

En variante, le système électronique de traitement 10 est un système électronique de segmentation d'image(s), le capteur 15 étant alors un capteur d'image(s) et le calculateur 20 étant configuré pour effectuer une segmentation de chaque image issue du capteur d'image(s).

Le capteur 15 est connu en soi. Le capteur 15 est par exemple un détecteur d'objet(s) configuré pour détecter un ou plusieurs objets, ou encore un capteur d'image(s) configuré pour prendre une ou plusieurs images d'une scène, et les transmettre au calculateur 20.

En variante, le capteur 15 est un capteur sonore, un capteur de détection d'objets, tel qu'un capteur lidar, un capteur radar, un capteur infrarouge, un capteur de proximité capacitif, un capteur de proximité inductif, un capteur de proximité à effet Hall ou encore un capteur de présence, configuré pour acquérir un signal caractéristique en fonction de la présence ou de l'absence d'objet(s), puis pour le transmettre au calculateur 20.

Le calculateur 20 est configuré pour traiter un ensemble de donnée(s), l'ensemble de donnée(s) correspondant typiquement à un ou plusieurs signaux captés par le capteur 15. Le calculateur 20 est alors typiquement configuré pour interpréter une scène captée par le capteur 15, c'est-à-dire pour identifier et/ou pour reconnaitre un type d'un ou plusieurs éléments - tels que personnes ou objets physiques - présents dans la scène captée et correspondants au signal ou aux signaux captés par le capteur 15.

Le calculateur 20 est configuré pour effectuer un traitement de données, notamment une classification de données, via la mise en œuvre d'un réseau RN de neurones artificiels, celui-ci comportant typiquement plusieurs couches de traitement successives $CT_i$, où i est un indice entier supérieur ou égal à 1. Dans l'exemple de la figure 1, l'indice i est par exemple égal à 1, 2 et respectivement 3, avec des première $CT_1$, deuxième $CT_2$ et troisième $CT_3$ couches de traitement représentées sur cette figure 1. Chaque couche de traitement respective $CT_i$ comporte, comme connu en soi, un ou plusieurs neurones artificiels 22, également appelés neurones formels.

Les couches de traitement CTi sont typiquement agencées de manière successive au sein du réseau de neurones RN, et les neurones artificiels 22 d'une couche de traitement donnée sont typiquement connectés à leur entrée aux neurones artificiels 22 de la couche précédente, et en sortie aux neurones artificiels 22 de la couche suivante. Les neurones artificiels 22 de la première couche, telle que la première couche de traitement CT1, sont connectés en entrée aux variables d'entrées, non représentées, du réseau de neurones RN, et les neurones artificiels 22 de la dernière couche de traitement, telle que la troisième couche de traitement CT3, sont connectés en sortie aux variables de sortie, non représentées, du réseau de neurones RN. Dans l'exemple de la figure 1, la deuxième couche de traitement CT2 forme alors une couche intermédiaire dont les neurones artificiels 22 sont connectés en entrée aux neurones artificiels 22 de la première couche de traitement CT1, et en sortie aux neurones artificiels 22 de la troisième couche de traitement CT3.

Comme connu en soi, à chaque neurone artificiel 22 est associée une opération, c'est-à-dire un type de traitement, à effectuer par ledit neurone artificiel 22 au sein de la couche de traitement correspondante. Chaque neurone artificiel 22 est typiquement apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone 22 et multiplié par un poids synaptique associé à la connexion entre ledit neurone 22 et l'élément respectif. L'élément respectif connecté en entrée dudit neurone 22 est une variable d'entrée du réseau de neurones RN lorsque ledit neurone appartient à une première couche, également appelée couche d'entrée, dudit réseau de neurones RN ; ou bien est un neurone d'une couche précédente du réseau de neurones RN lorsque ledit neurone appartient à une couche intermédiaire ou encore à une dernière couche, également appelée couche de sortie, du réseau de neurones RN. Comme connu en soi, la fonction d'activation, également appelée fonction de seuillage ou encore fonction de transfert, permet d'introduire une non-linéarité dans le traitement effectué par chaque neurone artificiel. Des exemples classiques d'une telle fonction d'activation sont la fonction sigmoïde, la fonction tangente hyperbolique, et la fonction de Heaviside, et la fonction d'unité de rectification linéaire, également appelée ReLU (de l'anglais *Rectified Linear Unit*). En complément facultatif, le neurone artificiel 22 est également apte à appliquer en outre un biais, à la sortie de la fonction d'activation, et la valeur délivrée au(x) élément(s) connecté(s) en sortie est alors le produit de la valeur de biais et de la valeur en sortie de la fonction d'activation.

Le réseau de neurones RN est par exemple un réseau de neurones convolutifs, et les couches de traitement CT1, CT2, CT3 sont alors typiquement chacune choisies parmi le groupe consistant en : une couche de convolution, une couche de normalisation de batch, une couche de mise en commun, une couche de correction et une couche entièrement connectée (de l'anglais *fully connected*).

Dans l'exemple de la figure 1, un module d'apprentissage 25, externe au calculateur 20, est configuré pour effectuer un apprentissage, également appelé entrainement, du réseau de neurones RN.

Dans l'exemple de la figure 1, le calculateur 20 comprend alors seulement un module d'inférence 30 configuré pour inférer le réseau de neurones RN préalablement entraîné, pour le traitement, notamment la classification, de données reçues en entrée du calculateur 20. Le calculateur 20 est alors configuré pour utiliser le réseau de neurones RN, préalablement entraîné, afin de calculer de nouvelles valeurs de sortie à partir de nouvelles valeurs d'entrée. En d'autres termes, il est configuré pour effectuer seulement l'inférence du réseau de neurones RN.

Le calculateur 20 est de préférence un calculateur embarqué, et est typiquement réalisé sous forme d'un processeur ou d'un microcontrôleur.

Le calculateur 20 comporte de préférence des opérateurs entiers et des registres entiers pour l'inférence dudit réseau de neurones RN.

Dans l'exemple de la figure 1, le module d'apprentissage 25 est réalisé sous forme d'un logiciel, c'est-à-dire sous forme d'un programme d'ordinateur. Il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Dans l'exemple de la figure 1, le module d'inférence 30 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

En variante, non représentée, le calculateur 20 comprend à la fois le module d'apprentissage 25 et le module d'inférence 30. Selon cette variante, le module d'apprentissage 25 et le module d'inférence 30 sont réalisés chacun sous forme d'un composant logique programmable, tel qu'un FPGA, ou encore sous forme d'un circuit intégré dédié, tel qu'un ASIC. Selon cette variante, le calculateur 20 est alors configuré pour effectuer à la fois l'apprentissage et l'inférence du réseau de neurones RN. Selon cette variante, seul le module d'inférence 30 comporte de préférence des opérateurs entiers et des registres entiers. Selon cette variante, le module d'apprentissage 25 comporte alors de préférence des opérateurs en virgule flottante et des registres en virgule flottante.

Le module d'apprentissage 25 est configuré pour effectuer l'apprentissage du réseau de neurones RN, notamment des valeurs de poids synaptique d'au moins une couche CT1, CT2, CT3 du réseau de neurones RN, et de préférence de chaque couche CT1, CT2, CT3 dudit réseau de neurones RN.

Le module d'apprentissage 25 est configuré pour effectuer l'apprentissage desdites valeurs de poids synaptique à partir de données d'apprentissage, chaque valeur de poids issue dudit apprentissage étant une valeur quantifiée de poids appartenant à un ensemble EQA, EQS de valeurs quantifiées.

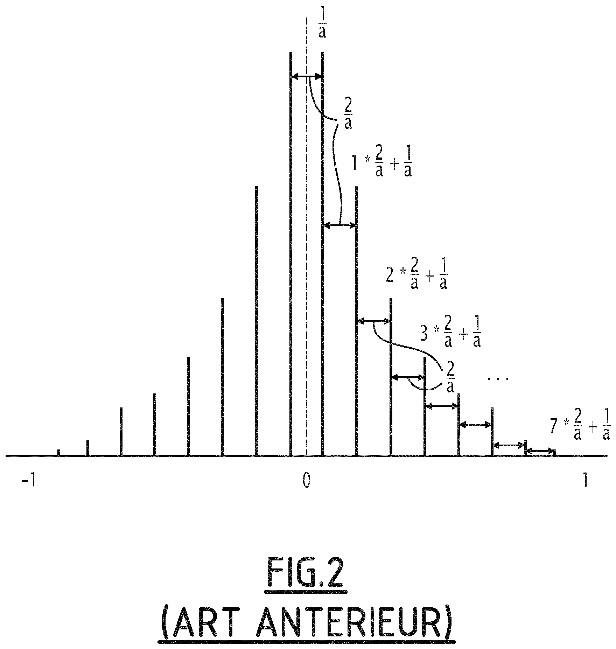

Selon l'état de la technique, en particulier selon l'algorithme de quantification DoReFa utilisé par la méthode SAT, et comme représenté sur la figure 2, l'ensemble de valeurs quantifiées est constitué de valeurs encodées avec un nombre prédéfini B de bits, et avec un pas de quantification $P_{ANT}$ entre deux valeurs quantifiées successives vérifiant l'équation suivante :

[1]

$$P_{ANT} = \frac{2}{2^B - 1}$$

les valeurs quantifiées étant en outre comprises dans un intervalle prédéfini, dit de quantification, égal à [-1 ; 1].

Sur la figure 2, le pas de quantification $P_{ANT}$ correspond à 2/a, avec a alors égal à $2^B$-1.

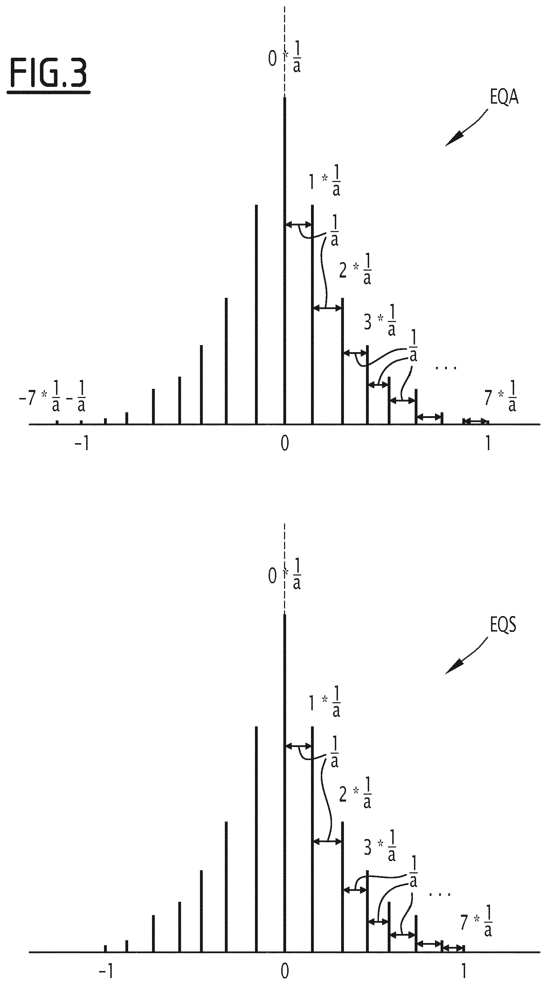

Selon l'invention et comme représenté sur la figure 3, l'ensemble de valeurs quantifiées EQA, EQS est constitué de valeurs encodées avec un nombre prédéfini B de bits, et avec un pas de quantification P entre deux valeurs quantifiées successives vérifiant l'équation suivante :

[2]

$$P = \frac{1}{\left\lfloor \frac{2^B - 1}{2} \right\rfloor} = \frac{1}{2^{B-1} - 1}$$

où $\lfloor . \rfloor$ représente la fonction partie entière ;

les valeurs quantifiées étant en outre comprises dans l'intervalle de quantification choisi parmi l'intervalle [-1-P ; 1] et l'intervalle [-1 ; 1].

Sur la figure 3, le pas de quantification P correspond à 1/a, avec a alors égal à $\left\lfloor \frac{2^B - 1}{2} \right\rfloor$, aussi égal à $2^{B-1}$-1.

Le nombre prédéfini B de bits est par exemple inférieur ou égal à 8 ; et est de préférence compris entre 3 et 5.

En complément, l'ensemble de valeurs quantifiées EQA, EQS inclut la valeur nulle. En comparaison, l'homme du métier observera que l'ensemble de valeurs quantifiées selon l'état de la technique n'inclut pas la valeur nulle, comme cela est visible sur la figure 2.

Sur la figure 3, selon un premier exemple de l'invention, l'ensemble de valeurs quantifiées est un ensemble de valeurs quantifiées asymétrique par rapport à la valeur nulle, et est alors noté EQA.

Suivant ce premier exemple, l'ensemble de valeurs quantifiées EQA vérifie typiquement l'équation suivante :

[3]

$$EQA = \{-1 - P + i \cdot P \; ; \; i \in [0; \; 2^B - 1]\} = \{i \cdot P \; ; \; i \in [-2^{B-1}; \; 2^{B-1} - 1]\}$$

l'intervalle de quantification étant alors égal à l'intervalle [-1-P ; 1].

Selon un deuxième exemple de l'invention, l'ensemble de valeurs quantifiées est un ensemble de valeurs quantifiées symétrique par rapport à la valeur nulle, et est alors noté EQS.

Suivant ce deuxième exemple, l'ensemble de valeurs quantifiées EQS vérifie typiquement l'équation suivante :

[4]

$$EQS = \{-1 + i \cdot P \; ; \; i \in [0; \; 2^B - 2]\} = \{i \cdot P \; ; \; i \in [-(2^{B-1} - 1); \; 2^{B-1} - 1]\}$$

l'intervalle de quantification étant alors égal à l'intervalle [-1 ; 1].

En complément, le module d'apprentissage 25 est configuré pour convertir, via une fonction de quantification, chaque valeur de poids apprise en la valeur quantifiée de poids respective appartenant à l'intervalle de quantification EQA, EQS.

La fonction de quantification vérifie par exemple l'équation suivante :

[5]

$$F_Q(W) = P \cdot round\left(\frac{W}{P}\right)$$

où $F_Q$ représente la fonction de quantification ;
W représente une valeur de poids respective ;
P représente le pas de quantification ; et
round représente une opération arrondi (arrondi à l'entier le plus proche, ou à l'entier le plus petit/grand, ou troncature (*truncation* en anglais))

En complément facultatif, le module d'apprentissage 25 est configuré pour effectuer un apprentissage initial des valeurs de poids synaptique à partir des données d'apprentissage, chaque valeur de poids apprise étant en outre convertie, via une fonction de transposition, en une valeur bornée de poids appartenant à un intervalle prédéfini, dit de bornage.

Selon ce complément facultatif, le module d'apprentissage 25 est configuré pour effectuer l'apprentissage selon l'ensemble de valeurs quantifiées EQA, EQS, après l'apprentissage initial et à partir des valeurs bornées de poids obtenues lors de l'apprentissage initial ; l'apprentissage initial formant un premier apprentissage du réseau de neurones RN, et l'apprentissage selon l'ensemble de valeurs quantifiées EQA, EQS formant un deuxième apprentissage du réseau de neurones RN, postérieur au premier apprentissage.

Selon ce complément facultatif, l'intervalle de bornage est de préférence égal à l'intervalle de quantification.

Selon ce complément facultatif et pour le premier exemple de l'ensemble de valeurs quantifiées, à savoir pour l'ensemble de valeurs quantifiées asymétrique EQA, la fonction de transposition vérifie par exemple l'équation suivante :

[6]

$$F_{CA}(W_{i,j}) = \left(1 + \frac{P}{2}\right) \cdot \left(\frac{\tan h(W_{i,j})}{\max_{r,s}\left|\tan h(W_{r,s})\right|}\right) - \frac{P}{2}$$

où $F_{CA}$ représente une première fonction de transposition, dite fonction de transposition asymétrique ;
$W_{i,j}$ représente une valeur de poids parmi une matrice W de valeurs de poids ;
P représente le pas de quantification ;
tanh représente la fonction tangente hyperbolique ;
|.| représente la fonction valeur absolue ;
max représente la fonction maximum ;
l'intervalle de quantification étant alors égal à l'intervalle [-1-P ; 1].

L'homme du métier comprendra alors que les poids pour lesquels la valeur a été convertie en une valeur bornée respective via la première fonction de transposition $F_{CA}$ lors du premier apprentissage, puis quantifiée en une valeur quantifiée respective via la fonction de quantification $F_Q$ lors du deuxième apprentissage, appartiennent alors à l'ensemble de valeurs quantifiées asymétrique EQA, c'est-à-dire que ladite valeur quantifiée respective, obtenue à l'issue du deuxième apprentissage, est incluse dans l'ensemble de valeurs quantifiées asymétrique EQA.

Selon ce complément facultatif et pour le deuxième exemple de l'ensemble de valeurs quantifiées, à savoir pour l'ensemble de valeurs quantifiées symétrique EQS, la fonction de transposition vérifie par exemple l'équation suivante :

[7]

$$F_{CS}(W_{i,j}) = \frac{\tan h(W_{i,j})}{\max_{r,s}\left|\tan h(W_{r,s})\right|}$$

où $F_{CS}$ représente une deuxième fonction de transposition, dite fonction de transposition symétrique ;
$W_{i,j}$ représente une valeur de poids parmi une matrice W de valeurs de poids ;

tanh représente la fonction tangente hyperbolique ;

|.| représente la fonction valeur absolue ;

max représente la fonction maximum ;

l'intervalle de quantification étant alors égal à l'intervalle [-1 ; 1].

De manière analogue, l'homme du métier comprendra que les poids pour lesquels la valeur a été convertie en une valeur bornée respective via la deuxième fonction de transposition $F_{CS}$ lors du premier apprentissage, puis quantifiée en une valeur quantifiée respective via la fonction de quantification $F_Q$ lors du deuxième apprentissage, appartiennent alors à l'ensemble de valeurs quantifiées symétrique EQS, c'est-à-dire que ladite valeur quantifiée respective, obtenue à l'issue du deuxième apprentissage, est incluse dans l'ensemble de valeurs quantifiées symétrique EQS.

Le module d'inférence 30 est configuré pour inférer le réseau de neurones RN préalablement entraîné. Selon l'invention, le module d'inférence 30 est de préférence configuré pour effectuer la somme pondérée de valeur(s) d'entrée, puis à appliquer la fonction d'activation à la somme pondérée via des opérateurs entiers et/ou en virgule fixe et des registres entiers et/ou en virgule fixe. Les registres sont typiquement des registres d'au plus 8 bits.

Autrement dit, selon cet aspect préférentiel, l'inférence est effectuée via un calcul en virgule fixe, par exemple à l'aide d'une unité arithmétique et logique en nombres entiers réguliers.

En complément facultatif, le module d'inférence 30 est configuré pour, lors l'inférence du réseau de neurones, multiplier les valeurs quantifiées de poids apprises par un multiple entier égal à $\left\lfloor \frac{2^B-1}{2} \right\rfloor$, aussi égal à $2^{B-1}-1$, avec B représentant le nombre prédéfini de bits utilisé pour l'encodage des valeurs quantifiées de poids et $\lfloor . \rfloor$ représentant la fonction partie entière.

La fonction d'activation est selon l'équation suivante :

[8]

$$A(Q) = \frac{\alpha_2}{I_2} * round\left( \frac{I_2}{\alpha_2}\frac{\alpha_1}{I_1} \mathsf{Y} \frac{1}{\left\lfloor \frac{I_w}{2} \right\rfloor} * clip\left( (Q * n) + \frac{\beta}{\mathsf{Y}}\frac{I_1}{\alpha_1}\left\lfloor \frac{I_w}{2} \right\rfloor ; 0; \frac{I_2}{\mathsf{Y}}\frac{I_1}{\alpha_1}\left\lfloor \frac{I_w}{2} \right\rfloor \right) \right)$$

où A représente une fonction d'activation globale pour la fusion d'une couche de convolution et d'une couche de normalisation de batch subséquente ;

Q sont les poids appartenant à l'intervalle $\left[ -\left\lfloor \frac{I_w}{2} \right\rfloor, \left\lfloor \frac{I_w}{2} \right\rfloor \right]$,

$I_1$ est un nombre entier égal à $2^{Bc}-1$, avec Bc représentant un nombre prédéfini de bits utilisé pour l'encodage de la couche de normalisation de batch précédente;

$I_2$ est un nombre entier égal à $2^{Bn}-1$, avec Bn représentant un nombre prédéfini de bits utilisé pour l'encodage de la couche de normalisation de batch courante ;

$I_w$ est un nombre entier égal à $2^{Bw}-1$, avec Bw représentant un nombre prédéfini de bits utilisé pour l'encodage des poids de la couche convolution ;n est un nombre entier, correspondant à la sortie de l'opération arrondi de la couche précédente ;

$\beta$ et Y sont des paramètres de la couche de normalisation de batch courante ;

$\alpha_1, \alpha_2$ sont des paramètres de la fonction d'activation clip définie ci-après, $\alpha$, étant associé à la fonction d'activation de la couche de normalisation de batch précédente et $\alpha_2$ à celle de la couche de normalisation de batch courante ;

$\lfloor . \rfloor$ représente la fonction partie entière ;

round représente une opération arrondi (arrondi à l'entier le plus proche, ou à l'entier le plus petit/grand, ou troncature (*truncation* en anglais))

clip représente une fonction d'activation vérifiant l'équation suivante :

[9]

$$clip(x; 0; \alpha_i) = \frac{1}{2}(|x| - |x - \alpha_i| + \alpha_i)$$

Selon ce complément facultatif, le module d'inférence 30 permet alors, en quelque sorte, de fusionner la couche de normalisation de batch avec la couche de convolution précédente, afin d'inférer ces deux couches sous forme d'une unique couche, ceci en prenant en compte en outre la quantification des poids et activations des couches fusionnées, effectuée lors de l'apprentissage.

Ce complément facultatif permet, en d'autres termes, d'augmenter la vitesse d'inférence en absorbant les paramètres, c'est-à-dire $\beta$ et Y, de la couche de normalisation de batch dans la couche de convolution. L'homme du métier observera en effet que la couche de normalisation de batch joue un rôle important pendant l'apprentissage du réseau de neurones convolutifs, mais qu'elle n'est pas nécessaire pendant l'inférence, de sorte que la fusion - lors de l'inférence - de cette couche de normalisation de batch avec la couche précédente de convolution n'impacte pas le résultat de l'inférence, tout en permettant d'en augmenter la vitesse.

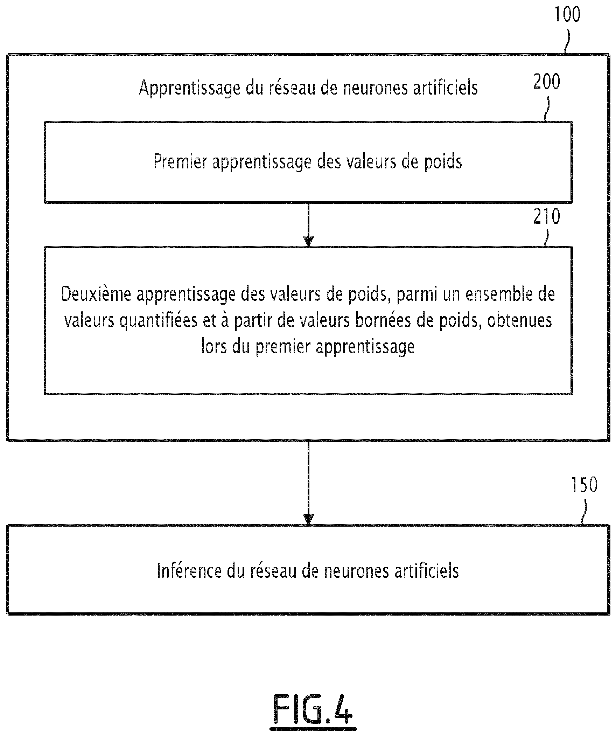

Le fonctionnement du calculateur 20 selon l'invention va maintenant être expliqué en regard de la figure 4 représentant un organigramme d'un procédé de traitement de données, notamment de classification de données, via l'implémentation du réseau de neurones artificiels RN avec le calculateur 20, le procédé comprenant une phase d'apprentissage 100 dans laquelle un procédé, selon l'invention, d'apprentissage de valeurs de poids synaptique d'au moins une couche CT1, CT2, CT3 du réseau de neurones 15 est mis en œuvre, puis une phase d'inférence 150 dans laquelle le réseau de neurones artificiels RN, préalablement entraîné, est utilisé pour calculer des valeurs de sortie, afin de traiter, notamment de classifier, i.e. classer, lesdites données.

Comme décrit précédemment, la phase d'apprentissage 100 est de préférence mise en œuvre par un ordinateur, cette phase d'apprentissage 100 étant effectuée par le module d'apprentissage 25, qui est typiquement un module logiciel. La phase d'inférence 150 subséquente est, quant à elle, de préférence mise en œuvre par le calculateur 20, et plus précisément par son module d'inférence 30. En particulier, la phase d'apprentissage 100 selon l'invention permet ensuite une mise en œuvre de la phase d'inférence 150 via des opérateurs entiers et/ou en virgule fixe et des registres entiers et/ou en virgule fixe, le module d'inférence 30 comportant de préférence de tels opérateurs entiers et/ou en virgule fixe et de tels registres entiers et/ou en virgule fixe, le module d'inférence 30 étant de préférence encore constitué de tels opérateurs et registres, entiers et/ou en virgule fixe.

La phase d'apprentissage 100 comprend une étape 200 d'apprentissage initial du réseau de neurones RN, en particulier des valeurs de poids synaptique dudit réseau, cette étape d'apprentissage initial 200 formant le premier apprentissage du réseau de neurones.

L'apprentissage en lui-même du réseau de neurones RN est connu en soi, et est effectué à partir des données d'apprentissage. Cet apprentissage est effectué via un algorithme de rétropropagation (de l'anglais *back-propagation*) pour le calcul du gradient de chaque paramètre du réseau de neurones RN, notamment de chaque poids synaptique.

Les paramètres du réseau de neurones RN sont les valeurs associées à chaque neurone artificiel 22 de ladite couche de traitement CTi correspondante et aptes à être déterminées via un apprentissage du réseau de neurones RN, ces paramètres comportant typiquement pour chaque neurone artificiel 22 une valeur de poids, une activation, i.e. une fonction d'activation, voire une valeur de biais, respectives.

Lors de cette étape d'apprentissage initial 200, chaque valeur de poids apprise est en outre convertie, via la fonction de transposition, en une valeur bornée de poids appartenant à l'intervalle prédéfini de bornage.

La fonction de transposition utilisée pour cette conversion lors du premier apprentissage 200 est par exemple la première fonction de transposition $F_{CA}$, et la conversion est alors effectuée typiquement selon l'équation (6) précédente.

En variante, la fonction de transposition utilisée pour la conversion lors du premier apprentissage 200 est la deuxième fonction de transposition $F_{CS}$, et la conversion est alors typiquement effectuée selon l'équation (7) précédente.

Lors de la phase d'apprentissage 100, à l'issue du premier apprentissage 200, le module d'apprentissage 25 effectue ensuite une étape 210 d'apprentissage des valeurs de poids du réseau de neurones RN à partir de données d'apprentissage, chaque valeur de poids issue dudit apprentissage étant une valeur quantifiée de poids appartenant à l'ensemble de valeurs quantifiées EQA, EQS, cette étape d'apprentissage 210 formant alors le deuxième apprentissage du réseau de neurones RN.

Lors de l'étape d'apprentissage 210, l'apprentissage est par exemple effectué également via l'algorithme de rétropropagation pour le calcul du gradient de chaque paramètre du réseau de neurones RN, notamment de chaque poids synaptique.

Selon l'invention, lors de cette étape d'apprentissage 210, l'ensemble de valeurs quantifiées EQA, EQS est constitué de valeurs encodées avec le nombre prédéfini B de bits, et avec le pas de quantification P entre deux valeurs quantifiées successives vérifiant l'équation (2) précédente.

Lors de l'étape d'apprentissage 210, afin que chaque valeur de poids issue dudit apprentissage soit une valeur quantifiée de poids appartenant à l'ensemble de valeurs quantifiées EQA, EQS, chaque valeur de poids apprise est par exemple convertie, via la fonction de quantification, telle que selon l'équation (5) précédente, en la valeur quantifiée de poids respective appartenant à l'intervalle de quantification.

Lorsque les poids ont été convertis via la première fonction de transposition $F_{CA}$ lors du premier apprentissage 200, leur valeur quantifiée obtenue à l'issue du deuxième apprentissage 210 est incluse dans l'ensemble de valeurs quantifiées asymétrique EQA.

De manière analogue, lorsque les poids ont été convertis via la deuxième fonction de transposition $F_{CS}$ lors du premier apprentissage 200, leur valeur quantifiée obtenue à l'issue du deuxième apprentissage 210 est incluse dans l'ensemble de valeurs quantifiées symétrique EQS.

À l'issue de la phase d'apprentissage 100, les valeurs de poids résultant dudit apprentissage sont alors incluses dans l'ensemble de valeurs quantifiées EQA, EQS pour la ou les couches ayant fait l'objet de cet apprentissage.

Lors de la phase d'inférence 150, le module d'inférence 30 infère le réseau de neurones artificiels RN pour traiter, notamment classifier, les données reçues en entrée du calculateur électronique 20, le réseau de neurones RN ayant été préalablement entraîné lors de la phase d'apprentissage 100.

Lors de cette phase d'inférence 150, le module d'inférence 30 effectue notamment, pour chaque neurone artificiel 22, la somme pondérée de valeur(s) d'entrée, puis applique la fonction d'activation à la somme pondérée. Cette inférence est de préférence effectuée via des opérateurs entiers et/ou en virgule fixe et des registres entiers et/ou en virgule fixe, notamment pour les neurones artificiels 22 de la ou des couches de convolution, voire en outre pour ceux de la ou des couches de normalisation de batch.

Les registres sont de préférence encore des registres d'au plus 8 bits, et en particulier des registres de B bits, avec B le nombre prédéfini de bits utilisé lors de la phase d'apprentissage 100, en particulier pour l'encodage des valeurs quantifiées de poids.

Lors de la phase d'inférence 150, le module d'inférence 30 multiplie alors typiquement les valeurs quantifiées de poids, apprises lors de la phase d'apprentissage 100, par le multiple entier égal à $\left\lfloor \frac{2^B - 1}{2} \right\rfloor$, aussi égal à $2^{B-1}-1$, avec $\lfloor . \rfloor$ représentant la fonction partie entière.

En complément facultatif, le module d'inférence 30 applique la fonction d'activation selon les équations (8) et (9) précédentes.

Ce complément facultatif permet alors de fusionner la couche de normalisation de batch avec la couche de convolution précédente, afin d'inférer ces deux couches sous forme d'une unique couche, et donc de manière plus rapide.

Le procédé d'apprentissage selon l'invention permet alors d'effectuer la phase d'inférence 150 via des opérateurs entiers et/ou en virgule fixe et des registres entiers et/ou en virgule fixe, tout en conservant de bonnes performances, comme le montre la table 1 ci-après.

[Table 1]

| B | Ensemble de valeurs quantifiées | Performance Apprentissage | Performance Inférence |
|---|---|---|---|
| **5** | *Etat de la technique* | 72,23% | *0% (72,11%)* |
| | EQS | 72,24% | 72,19% |
| | EQA | 72,21% | 72,21 % |
| **4** | *Etat de la technique* | *71,80%* | *0% (71,74%)* |
| | EQS | 71,72% | 71,74% |
| | EQA | 71,55% | 71,48% |
| **3** | *Etat de la technique* | *68,45%* | *0% (68,41%)* |
| | EQS | 67,48% | 67,45% |
| | EQA | 62,83% | 62,82% |

Dans la table 1 ci-dessus, la performance représente typiquement un taux de reconnaissance, i.e. un taux de classification correcte, lorsque l'inférence vise à classifier les données reçues en entrée du calculateur 20. La performance indiquée dans la colonne intitulée « Performance Apprentissage » est la performance mesurée lors de la phase d'apprentissage 100 avec des poids et activations en virgule flottante. La performance indiquée dans la colonne intitulée « Performance Inférence » est la performance mesurée lors de la phase d'inférence 150 avec des poids et activations en entiers, où le nombre de bits utilisés pour représenter ces entiers est égal au nombre B pour les poids, et à huit pour les activations.

L'homme du métier observera alors qu'avec le procédé d'apprentissage de l'état de la technique, les résultats obtenus ensuite lors de la phase d'inférence sont extrêmement dégradés, avec des performances nulles, si l'inférence est effectuée avec des poids en entiers où le nombre de bits utilisés pour représenter ces entiers est égal au nombre B utilisé lors de la phase d'apprentissage. Le procédé d'apprentissage de l'état de la technique nécessite alors d'effectuer la phase d'inférence avec des poids exprimés en virgule flottante, ce qui est moins efficace ; ou encore avec des entiers exprimés sur B+1 bits, ce qui nécessite alors d'utiliser des registres et opérateurs avec au moins un bit supplémentaire, ce qui est également moins efficace et plus coûteux. Les performances obtenues dans le cas de l'état de la technique avec des entiers exprimés sur B+1 bits sont indiquées entre parenthèses dans la table 1 ci-dessus, à titre d'information complémentaire.

Ainsi, la quantification selon l'invention permet d'utiliser un encodage en virgule fixe, plutôt qu'en virgule flottante, pour l'inférence du réseau de neurones RN, ce qui permet alors une mise en œuvre beaucoup plus efficace de ladite inférence, car les opérations en nombres entiers nécessitent moins de calculs sur la plupart des cœurs de processeurs, y compris les microcontrôleurs.

**Revendications**

1. Procédé d'apprentissage de valeurs de poids synaptique d'au moins une couche (CT1, CT2, CT3) d'un réseau de neurones artificiels (RN), chaque neurone artificiel (22) d'une couche (CT1, CT2, CT3) respective étant apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone (22) et multipliée par un poids synaptique associé à la connexion entre ledit neurone (22) et l'élément respectif, l'élément respectif étant une variable d'entrée du réseau de neurones (RN) ou un neurone d'une couche précédente du réseau de neurones (RN),

  le procédé étant mis en œuvre par ordinateur et comprenant l'étape suivante :

  - apprentissage (210) des valeurs de poids du réseau de neurones (RN) à partir de données d'apprentissage, chaque valeur de poids issue dudit apprentissage étant une valeur quantifiée de poids appartenant à un ensemble de valeurs quantifiées ;

  les valeurs quantifiées étant comprises dans un intervalle prédéfini, dit de quantification, l'intervalle de quantification étant choisi parmi l'intervalle [-1-P ; 1] et l'intervalle [-1 ; 1], où P est un pas de quantification entre deux valeurs quantifiées successives ;
  dans lequel procédé l'ensemble de valeurs quantifiées est constitué de valeurs encodées avec un nombre prédéfini B de bits, et avec le pas de quantification P vérifiant :

  $$P = \frac{1}{\left\lfloor \frac{2^B - 1}{2} \right\rfloor}$$

  où $\lfloor . \rfloor$ représente la fonction partie entière ; et
  où la fonction d'activation est appliquée selon l'équation suivante :

  $$A(Q) = \frac{\alpha_2}{I_2} * round\left( \frac{I_2}{\alpha_2} \frac{\alpha_1}{I_1} Ɣ \frac{1}{\left\lfloor \frac{I_w}{2} \right\rfloor} * clip\left( (Q * n) + \frac{\beta}{Ɣ} \frac{I_1}{\alpha_1} \left\lfloor \frac{I_w}{2} \right\rfloor ; 0; \frac{I_2}{Ɣ} \frac{I_1}{\alpha_1} \left\lfloor \frac{I_w}{2} \right\rfloor \right) \right)$$

  où A représente une fonction d'activation globale pour la fusion d'une couche de convolution et d'une couche de normalisation de batch subséquente ;

  Q sont les poids appartenant à l'intervalle $\left[ -\left\lfloor \frac{I_w}{2} \right\rfloor, \left\lfloor \frac{I_w}{2} \right\rfloor \right]$,

  $I_1$ est un nombre entier égal à $2^{Bc}$-1, avec Bc représentant un nombre prédéfini de bits utilisé pour l'encodage de la couche de normalisation de batch précédente ;
  $I_2$ est un nombre entier égal à $2^{Bn}$-1, avec Bn représentant un nombre prédéfini de bits utilisé pour l'encodage de la couche de normalisation de batch courante ;
  $I_w$ est un nombre entier égal à $2^{Bw}$-1, avec Bw représentant un nombre prédéfini de bits utilisé pour l'encodage des poids de la couche convolution ; n est un nombre entier, correspondant à la sortie de l'opération arrondi de la couche précédente ;
  β et Ɣ sont des paramètres de la couche de normalisation de batch courante ;
  $\alpha_1$, $\alpha_2$ sont des paramètres de la fonction d'activation clip définie ci-après, $\alpha_1$ étant associé à la fonction d'activation de la couche de normalisation de batch précédente et $\alpha_2$ à celle de la couche de normalisation de

batch courante ; $\lfloor \cdot \rfloor$ représente la fonction partie entière ;
round représente une opération arrondi ;
clip représente une fonction d'activation vérifiant l'équation suivante :

$$clip(x; 0; \alpha_i) = \frac{1}{2}(|x| - |x - \alpha_i| + \alpha_i)$$

**2.** Procédé selon la revendication 1, dans lequel l'ensemble de valeurs quantifiées inclut la valeur nulle.

**3.** Procédé selon la revendication 1 ou 2, dans lequel l'ensemble de valeurs quantifiées vérifie l'équation suivante :

$$EQA = \{-1 - P + i \cdot P ; i \in [0; 2^B - 1]\} = \{i \cdot P ; i \in [-2^{B-1}; 2^{B-1} - 1]\}$$

l'intervalle de quantification étant alors égal à l'intervalle [-1-P ; 1].

**4.** Procédé selon la revendication 1 ou 2, dans lequel l'ensemble de valeurs quantifiées vérifie l'équation suivante :

$$EQS = \{-1 + i \cdot P ; i \in [0; 2^B - 2]\} = \{i \cdot P ; i \in [-(2^{B-1} - 1); 2^{B-1} - 1]\}$$

l'intervalle de quantification étant alors égal à l'intervalle [-1 ; 1].

**5.** Procédé selon l'une quelconque des revendications précédentes, dans lequel le procédé comprend en outre l'étape suivante :

- apprentissage initial (200) des valeurs de poids du réseau de neurones (RN) à partir des données d'apprentissage, chaque valeur de poids apprise étant en outre convertie, via une fonction de transposition, en une valeur bornée de poids appartenant à un intervalle prédéfini, dit de bornage ;
l'étape d'apprentissage (210) étant effectuée après l'étape d'apprentissage initial (200) et à partir des valeurs bornées de poids obtenues lors de d'apprentissage initial ; l'étape d'apprentissage initial (200) formant un premier apprentissage du réseau de neurones, et l'étape d'apprentissage (210) formant un deuxième apprentissage du réseau de neurones, postérieur au premier apprentissage ;
l'intervalle de bornage étant de préférence égal à l'intervalle de quantification.

**6.** Procédé selon la revendication 5, dans lequel la fonction de transposition vérifie l'équation suivante :

$$F_{CA}(W_{i,j}) = \left(1 + \frac{P}{2}\right) \cdot \left(\frac{\tan h(W_{i,j})}{\max_{r,s}|\tan h(W_{r,s})|}\right) - \frac{P}{2}$$

où $F_{CA}$ représente une première fonction de transposition, dite fonction de transposition asymétrique ;
$W_{i,j}$ représente une valeur de poids parmi une matrice W de valeurs de poids ;
P représente le pas de quantification ;
tanh représente la fonction tangente hyperbolique ;
|.| représente la fonction valeur absolue ;
max représente la fonction maximum ;
l'intervalle de quantification étant alors égal à l'intervalle [-1-P ; 1].

**7.** Procédé selon la revendication 5, dans lequel la fonction de transposition vérifie l'équation suivante :

$$F_{CS}(W_{i,j}) = \frac{\tan h(W_{i,j})}{\max_{r,s}|\tan h(W_{r,s})|}$$

où $F_{CS}$ représente une deuxième fonction de transposition, dite fonction de transposition symétrique ;

$W_{i,j}$ représente une valeur de poids parmi une matrice W de valeurs de poids ;
tanh représente la fonction tangente hyperbolique ;
|.| représente la fonction valeur absolue ;
max représente la fonction maximum ;
l'intervalle de quantification étant alors égal à l'intervalle [-1 ; 1].

**8.** Procédé selon l'une quelconque des revendications précédentes, dans lequel, lors de l'étape d'apprentissage, chaque valeur de poids apprise est convertie, via une fonction de quantification, en la valeur quantifiée de poids respective appartenant à l'intervalle de quantification ;

la fonction de quantification vérifiant de préférence l'équation suivante :

$$F_Q(W) = P \cdot round\left(\frac{W}{P}\right)$$

où $F_Q$ représente la fonction de quantification ;
W représente une valeur de poids respective ;
P représente le pas de quantification ; et
round une opération arrondi.

**9.** Procédé selon l'une quelconque des revendications précédentes, dans lequel le nombre prédéfini B de bits est inférieur ou égal à 8 ;
le nombre prédéfini B de bits étant de préférence compris entre 3 et 5.

**10.** Procédé selon l'une quelconque des revendications précédentes, dans lequel le réseau de neurones artificiels (RN) est configuré pour traiter, notamment pour classifier, des données ;
le réseau de neurones artificiels (RN) étant de préférence configuré pour être mis en œuvre par un calculateur électronique (20) connecté à un capteur (15), pour le traitement d'au moins un objet issu du capteur (15).

**11.** Procédé de traitement de données, notamment de classification de données, le procédé étant mis en œuvre par un calculateur électronique (20) implémentant un réseau de neurones artificiels (RN), le procédé comprenant :

- une phase (100) d'apprentissage du réseau de neurones artificiels (RN), et
- une phase (150) d'inférence du réseau de neurones artificiels (RN), lors de laquelle des données, reçues en entrée du calculateur électronique (20), sont traitées, notamment classées, via le réseau de neurones artificiels (RN), préalablement entraîné lors de la phase d'apprentissage (100),

**caractérisé en ce que** la phase d'apprentissage (100) est effectuée en mettant en œuvre un procédé d'apprentissage selon l'une quelconque des revendications 1 à 10.

**12.** Programme d'ordinateur comportant des instructions logicielles qui, lorsqu'elles sont exécutées par un ordinateur, mettent en œuvre un procédé d'apprentissage selon l'une quelconque des revendications 1 à 10.

**13.** Calculateur électronique (20) de traitement de données, notamment de classification de données, via la mise en œuvre d'un réseau (RN) de neurones artificiels (22), chaque neurone artificiel (22) d'une couche respective (CT1, CT2, CT3) du réseau de neurones (RN) étant apte à effectuer une somme pondérée de valeur(s) d'entrée, puis à appliquer une fonction d'activation à la somme pondérée pour délivrer une valeur de sortie, chaque valeur d'entrée étant reçue de la part d'un élément respectif connecté en entrée dudit neurone (22) et multipliée par un poids synaptique associé à la connexion entre ledit neurone (22) et l'élément respectif, l'élément respectif étant une variable d'entrée du réseau de neurones (RN) ou un neurone d'une couche précédente du réseau de neurones,

le calculateur (20) comprenant :

- un module d'inférence (30) configuré pour inférer le réseau de neurones artificiels (RN) préalablement entraîné, pour le traitement, notamment la classification, de données reçues en entrée du calculateur électronique (20),

dans lequel calculateur électronique (20) le réseau de neurones artificiels (RN) préalablement entraîné est issu d'un programme d'ordinateur selon la revendication 12 ; et

où la fonction d'activation est appliquée selon l'équation suivante :

$$A(Q) = \frac{\alpha_2}{I_2} * round\left(\frac{I_2}{\alpha_2}\frac{\alpha_1}{I_1}Y\frac{1}{\left\lfloor\frac{I_w}{2}\right\rfloor} * clip\left((Q*n) + \frac{\beta}{Y}\frac{I_1}{\alpha_1}\left\lfloor\frac{I_w}{2}\right\rfloor ; 0; \frac{I_2}{Y}\frac{I_1}{\alpha_1}\left\lfloor\frac{I_w}{2}\right\rfloor\right)\right)$$

où A représente une fonction d'activation globale pour la fusion d'une couche de convolution et d'une couche de normalisation de batch subséquente ;

Q sont les poids appartenant à l'intervalle $\left[-\left\lfloor\frac{I_w}{2}\right\rfloor, \left\lfloor\frac{I_w}{2}\right\rfloor\right]$ ,

$I_1$ est un nombre entier égal à $2^{Bc}$-1, avec Bc représentant un nombre prédéfini de bits utilisé pour l'encodage de la couche de normalisation de batch précédente ;

$I_2$ est un nombre entier égal à $2^{Bn}$-1, avec Bn représentant un nombre prédéfini de bits utilisé pour l'encodage de la couche de normalisation de batch courante ;

$I_w$ est un nombre entier égal à $2^{Bw}$-1, avec Bw représentant un nombre prédéfini de bits utilisé pour l'encodage des poids de la couche convolution ;n est un nombre entier, correspondant à la sortie de l'opération arrondi de la couche précédente ;

$\beta$ et Y sont des paramètres de la couche de normalisation de batch courante ;

$\alpha_1$, $\alpha_2$ sont des paramètres de la fonction d'activation clip définie ci-après, $\alpha_1$ étant associé à la fonction d'activation de la couche de normalisation de batch précédente et $\alpha_2$ à celle de la couche de normalisation de batch courante ;

$\lfloor . \rfloor$ représente la fonction partie entière ;

round représente une opération arrondi ;

clip représente une fonction d'activation vérifiant l'équation suivante :

$$clip(x; 0; \alpha_i) = \frac{1}{2}(|x| - |x - \alpha_i| + \alpha_i)$$

**14.** Calculateur (20) selon la revendication 13, dans lequel le module d'inférence (30) est configuré pour effectuer la somme pondérée de valeur(s) d'entrée, puis à appliquer la fonction d'activation à la somme pondérée via des opérateurs entiers et/ou en virgule fixe et des registres entiers et/ou en virgule fixe ;

les registres étant de préférence des registres d'au plus 8 bits ;

les valeurs quantifiées de poids apprises étant de préférence, pour l'inférence du réseau de neurones, multipliées par un multiple entier égal à $\left\lfloor\frac{2^B - 1}{2}\right\rfloor$ , avec B représentant le nombre prédéfini de bits utilisé pour l'encodage des valeurs quantifiées de poids et $\lfloor . \rfloor$ représentant la fonction partie entière.

**15.** Système électronique (10) de traitement d'objet(s), comprenant un capteur (15) et un calculateur électronique (20) connecté au capteur (15), le calculateur (20) étant configuré pour traiter au moins un objet issu du capteur (15), **caractérisé en ce que** le calculateur est selon la revendication 13 ou 14.

**Patentansprüche**

**1.** Verfahren zum Lernen von synaptischen Gewichtswerten mindestens einer Schicht (CT1, CT2, CT3) eines künstlichen neuronalen Netzes (RN), wobei jedes künstliche Neuron (22) einer jeweiligen Schicht (CT1, CT2, CT3) geeignet ist, um eine gewichtete Summe von Eingangswert(en) auszuführen und dann eine Aktivierungsfunktion auf die gewichtete Summe anzuwenden, um einen Ausgangswert bereitzustellen, wobei jeder Eingabewert von einem jeweiligen Element empfangen wird, das mit dem Eingang des Neurons (22) verbunden ist, und mit einem synaptischen Gewicht multipliziert wird, das mit der Verbindung zwischen dem Neuron (22) und dem jeweiligen Element assoziiert ist, wobei das jeweilige Element eine Eingangsvariable des neuronalen Netzes (RN) oder ein Neuron aus einer vorherigen Schicht des neuronalen Netzes (RN) ist,

wobei das Verfahren rechnerimplementiert ist und den folgenden Schritt umfasst:

- Lernen (210) der Gewichtswerte des neuronalen Netzes (RN) anhand der Lerndaten, wobei jeder Gewichtswert aus dem genannten Lernen ein quantifizierter Gewichtswert ist, der zu einem Satz von quantifizierten Werten gehört;

wobei die quantifizierten Werte in einem vordefinierten Intervall, dem sogenannten Quantifizierungsintervall, liegen, wobei das Quantifizierungsintervall ausgewählt ist aus dem Intervall [-1-P; 1] und dem Intervall [-1; 1], wobei P ein Quantifizierungsschritt zwischen zwei aufeinanderfolgenden quantifizierten Werten ist;
wobei bei diesem Verfahren der Satz quantifizierter Werte aus Werten besteht, die mit einer vordefinierten Anzahl B von Bits codiert sind, und wobei der Quantifizierungsschritt P Folgendes erfüllt:

$$P = \frac{1}{\left| \frac{2^B - 1}{2} \right|}$$

wobei |.| die ganzzahlige Funktion darstellt; und
wobei
die Aktivierungsfunktion gemäß der folgenden Gleichung angewendet wird:

$$A(Q) = \frac{\alpha_2}{l_2} * round\left( \frac{l_2}{\alpha_2} \frac{\alpha_1}{l_1} \gamma \frac{1}{\left\lfloor \frac{l_w}{2} \right\rfloor} * clip\left( (Q * n) + \frac{\beta}{\gamma} \frac{l_1}{\alpha_1} \left\lfloor \frac{l_w}{2} \right\rfloor ; 0 ; \frac{l_2}{\gamma} \frac{l_1}{\alpha_1} \left\lfloor \frac{l_w}{2} \right\rfloor \right) \right)$$

wobei A eine globale Aktivierungsfunktion für die Verschmelzung einer Faltungsschicht und einer nachfolgenden Batch-Normalisierungsschicht darstellt;

Q die Gewichte sind, die zu dem Intervall $[-\left\lfloor \frac{l_w}{2} \right\rfloor, \left\lfloor \frac{l_w}{2} \right\rfloor]$ gehören,

$l_1$ eine ganze Zahl gleich $2^{Bc}-1$ ist, wobei Bc eine vordefinierte Anzahl von Bits darstellt, die für die Kodierung der vorherigen Batch-Normalisierungsschicht verwendet wird;
$l_2$ eine ganze Zahl gleich $2^{Bn}-1$ ist, wobei Bn eine vordefinierte Anzahl von Bits darstellt, die für die Kodierung der aktuellen Batch-Normalisierungsschicht verwendet wird;
$l_w$ eine ganze Zahl gleich $2^{Bw}-1$ ist, wobei Bw eine vordefinierte Anzahl von Bits darstellt, die für die Kodierung der Gewichte der Faltungsschicht verwendet wird; n eine ganze Zahl ist, die dem Ausgang der Rundungsoperation aus der vorherigen Schicht entspricht;
$\beta$ und $\gamma$ Parameter der aktuellen Batch-Normalisierungsschicht sind;
$\alpha_1$, $\alpha_2$ Parameter der nachfolgend definierten Clip-Aktivierungsfunktion sind, wobei $\alpha_1$ mit der Aktivierungsfunktion der vorherigen Batch-Normalisierungsschicht und $\alpha_2$ mit der der aktuellen Batch-Normalisierungsschicht assoziiert ist;

$\lfloor \cdot \rfloor$ die Ganzzahlfunktion darstellt;
round einen Rundungsvorgang darstellt;
clip eine Aktivierungsfunktion darstellt, die die folgende Gleichung erfüllt:

$$clip(x; 0; \alpha_i) = \frac{1}{2}(|x| - |x - \alpha_i| + \alpha_i)$$

2. Verfahren nach Anspruch 1, wobei der Satz quantifizierter Werte den Wert null beinhaltet.

3. Verfahren nach Anspruch 1 oder 2, wobei der Satz quantifizierter Werte die folgende Gleichung erfüllt:

$$EQA = \{-1 - P + i \cdot P \; ; \; i \in [0; 2^B - 1]\} = \{i \cdot P \; ; \; i \in [-2^{B-1}; 2^{B-1} - 1]\}$$

wobei das Quantifizierungsintervall dann gleich wie das Intervall [-1-P; 1] ist.

4.  Verfahren nach Anspruch 1 oder 2, wobei der Satz quantifizierter Werte die folgende Gleichung erfüllt:

$$EQS = \{-1 + i \cdot P \,;\, i \in [0;\, 2^B - 2]\} = \{i \cdot P \,;\, i \in [-(2^{B-1} - 1);\, 2^{B-1} - 1]\}$$

wobei das Quantifizierungsintervall dann gleich wie das Intervall [-1; 1] ist.

5.  Verfahren nach einem der vorherigen Ansprüche, wobei das Verfahren ferner den folgenden Schritt umfasst:

    - initiales Lernen (200) der Gewichtswerte des neuronalen Netzes (RN) anhand der Lerndaten, wobei jeder gelernte Gewichtswert ferner über eine Transpositionsfunktion in einen beschränkten Gewichtswert umgewandelt wird, der zu einem vordefinierten Intervall, dem sogenannten Beschränkungsintervall, gehört;
    der Lernschritt (210) nach dem anfänglichen Lernschritt (200) und anhand der beschränkten Gewichtswerte, die beim anfänglichen Lernen erlangt werden, durchgeführt wird; der anfängliche Lernschritt (200) ein erstes Lernen des neuronalen Netzes bildet, und der Lernschritt (210) ein zweites Lernen des neuronalen Netzes nach dem ersten Lernen bildet;
    wobei das Beschränkungsintervall vorzugsweise gleich wie das Quantifizierungsintervall ist.

6.  Verfahren nach Anspruch 5, wobei die Transpositionsfunktion die folgende Gleichung erfüllt:

$$F_{CA}(W_{i,j}) = \left(1 + \frac{P}{2}\right) \cdot \left(\frac{\tan h(W_{i,j})}{\max_{r,s}|\tan h(W_{r,s})|}\right) - \frac{P}{2}$$

    wobei $F_{CA}$ eine erste Transpositionsfunktion darstellt, die als asymmetrische Transpositionsfunktion bezeichnet wird;
    $W_{i,j}$ einen Gewichtswert aus einer Matrix W von Gewichtswerten darstellt;
    P den Quantifizierungsschritt darstellt;
    tanh die hyperbolische Tangensfunktion darstellt;
    |.| die Absolutwertfunktion darstellt; max die Maximalfunktion darstellt;
    wobei das Quantifizierungsintervall dann gleich wie das Intervall [-1-P; 1] ist.

7.  Verfahren nach Anspruch 5, wobei die Transpositionsfunktion die folgende Gleichung erfüllt:

$$F_{CS}(W_{i,j}) = \frac{\tan h(W_{i,j})}{\max_{r,s}|\tan h(W_{r,s})|}$$

    wobei $F_{CS}$ eine zweite Transpositionsfunktion darstellt, die als symmetrische Transpositionsfunktion bezeichnet wird;
    $W_{i,j}$ einen Gewichtswert aus einer Matrix W von Gewichtswerten darstellt;
    tanh die hyperbolische Tangensfunktion darstellt;
    |.| die Absolutwertfunktion darstellt;
    max die Maximalfunktion darstellt;
    wobei das Quantifizierungsintervall dann gleich wie das Intervall [-1; 1] ist.

8.  Verfahren nach einem der vorherigen Ansprüche, wobei in dem Lernschritt jeder gelernte Gewichtswert über eine Quantifizierungsfunktion in den jeweiligen quantifizierten Gewichtswert, der zu dem Quantifizierungsintervall gehört, umgewandelt wird;
    wobei die Quantifizierungsfunktion vorzugsweise die folgende Gleichung erfüllt:

$$F_{Q}(W) = P \cdot round\left(\frac{W}{P}\right)$$

    wobei $F_{Q}$ die Quantifizierungsfunktion darstellt;
    W einen jeweiligen Gewichtswert darstellt;
    P den Quantifizierungsschritt darstellt; und
    round einen Rundungsvorgang darstellt.

9. Verfahren nach einem der vorherigen Ansprüche, wobei die vordefinierte Anzahl B von Bits kleiner als oder gleich wie 8 ist;
wobei die vordefinierte Anzahl B von Bits vorzugsweise zwischen 3 und 5 ist.

10. Verfahren nach einem der vorherigen Ansprüche, wobei das künstliche neuronale Netz (RN) konfiguriert ist, um Daten zu verarbeiten, insbesondere zu klassifizieren;
wobei das künstliche neuronale Netz (RN) vorzugsweise konfiguriert ist, um von einem elektronischen Rechner (20), der mit einem Sensor (15) verbunden ist, zur Verarbeitung von mindestens einem Objekt aus dem Sensor (15) implementiert wird.

11. Datenverarbeitungsverfahren, insbesondere zur Klassifizierung von Daten, wobei das Verfahren von einem elektronischen Rechner (20) implementiert wird, der ein künstliches neuronales Netzwerk (RN) implementiert, das Verfahren umfassend:

    - eine Lernphase (100) des künstlichen neuronalen Netzes (RN), und
    - eine Interferenzphase (150) des künstlichen neuronalen Netzes (RN), bei der Daten, die an dem Eingang des elektronischen Rechners (20) empfangen werden, über das künstliche neuronale Netz (RN), das zuvor in der Lernphase (100) trainiert wurde, verarbeitet, insbesondere klassifiziert, werden,

    **dadurch gekennzeichnet, dass** die Lernphase (100) durch Implementieren eines Lernverfahrens nach einem der Ansprüche 1 bis 10 ausgeführt wird.

12. Computerprogramm, umfassend Softwareanweisungen, die, wenn sie von einem Computer ausgeführt werden, ein Lernverfahren nach einem der Ansprüche 1 bis 10 implementieren.

13. Elektronischer Rechner (20) zur Datenverarbeitung, insbesondere zur Datenklassifizierung, über die Implementierung eines Netzes (RN) aus künstlichen Neuronen (22), wobei jedes künstliche Neuron (22) einer jeweiligen Schicht (CT1, CT2, CT3) des neuronalen Netzes (RN) geeignet ist, um eine gewichtete Summe von Eingangswert(en) auszuführen und dann eine Aktivierungsfunktion auf die gewichtete Summe anzuwenden, um einen Ausgangswert bereitzustellen,

    wobei jeder Eingangswert von einem jeweiligen Element empfangen wird, das mit dem Eingang des Neurons (22) verbunden ist, und mit einem synaptischen Gewicht multipliziert wird, das mit der Verbindung zwischen dem Neuron (22) und dem jeweiligen Element assoziiert ist, wobei das jeweilige Element eine Eingangsvariable des neuronalen Netzes (RN) oder ein Neuron aus einer vorherigen Schicht des neuronalen Netzes ist,
    der Rechner (20) umfassend:

    - ein Inferenzmodul (30), das konfiguriert ist, um das zuvor trainierte künstliche neuronale Netz (RN) für die Verarbeitung, insbesondere die Klassifizierung, von Daten, die als Eingang von dem elektronischen Rechner (20) empfangen werden, zu inferieren,

    wobei der elektronische Rechner (20)
    das zuvor trainierte künstliche neuronale Netz (RN) aus einem Computerprogramm nach Anspruch 12 stammt; und
    wobei
    die Aktivierungsfunktion gemäß der folgenden Gleichung angewendet wird:

    $$A(Q) = \frac{\alpha_2}{l_2} * round\left(\frac{l_2}{\alpha_2}\frac{\alpha_1}{l_1}\Upsilon\frac{1}{\left\lfloor\frac{l_w}{2}\right\rfloor} * clip\left((Q*n) + \frac{\beta}{\Upsilon}\frac{l_1}{\alpha_1}\left\lfloor\frac{l_w}{2}\right\rfloor; 0; \frac{l_2}{\Upsilon}\frac{l_1}{\alpha_1}\left\lfloor\frac{l_w}{2}\right\rfloor\right)\right)$$

    wobei A eine globale Aktivierungsfunktion für die Verschmelzung einer Faltungsschicht und einer nachfolgenden Batch-Normalisierungsschicht darstellt;

    Q die Gewichte sind, die zu dem Intervall $[-\left\lfloor\frac{l_w}{2}\right\rfloor, \left\lfloor\frac{l_w}{2}\right\rfloor]$ gehören,

    $l_1$ eine ganze Zahl gleich $2^{Bc}-1$ ist, wobei Bc eine vordefinierte Anzahl von Bits darstellt, die für die Kodierung der vorherigen Batch-Normalisierungsschicht verwendet wird;

$I_2$ eine ganze Zahl gleich $2^{Bn}$-1 ist, wobei Bn eine vordefinierte Anzahl von Bits darstellt, die für die Kodierung der aktuellen Batch-Normalisierungsschicht verwendet wird;

$I_w$ eine ganze Zahl gleich $2^{Bw}$-1 ist, wobei Bw eine vordefinierte Anzahl von Bits darstellt, die für die Kodierung der Gewichte der Faltungsschicht verwendet wird; n eine ganze Zahl ist, die dem Ausgang der Rundungsoperation aus der vorherigen Schicht entspricht;

$\beta$ und Y Parameter der aktuellen Batch-Normalisierungsschicht sind;

$\alpha_1$, $\alpha_2$ Parameter der nachfolgend definierten Clip-Aktivierungsfunktion sind, wobei $\alpha_1$ mit der Aktivierungsfunktion der vorherigen Batch-Normalisierungsschicht und $\alpha_2$ mit der der aktuellen Batch-Normalisierungsschicht assoziiert ist;

$\lfloor . \rfloor$ die Ganzzahlfunktion darstellt;

round einen Rundungsvorgang darstellt;

clip eine Aktivierungsfunktion darstellt, die die folgende Gleichung erfüllt:

$$clip(x; 0; \alpha_i) = \frac{1}{2}(|x| - |x - \alpha_i| + \alpha_i)$$

14. Rechner (20) nach Anspruch 13, wobei das Inferenzmodul (30) konfiguriert ist, um die gewichtete Summe von Eingangswert(en) zu bilden und dann die Aktivierungsfunktion auf die gewichtete Summe über ganzzahlige und/oder Festkommaoperatoren und ganzzahlige und/oder Festkommaregister anzuwenden;

die Register vorzugsweise Register mit höchstens 8 Bit sind;

die gelernten quantifizierten Gewichtswerte für die Inferenz des neuronalen Netzes vorzugsweise mit einem ganzzahligen Vielfachen gleich $\left\lfloor \frac{2^B - 1}{2} \right\rfloor$ multipliziert werden, wobei B die vordefinierte Anzahl von Bits darstellt, die für die Kodierung der quantifizierten Gewichtswerte verwendet wird, und $\lfloor . \rfloor$ die Ganzzahlfunktion darstellt.

15. Elektronisches System (10) zur Objektverarbeitung, umfassend einen Sensor (15) und einen elektronischen Rechner (20), der mit dem Sensor (15) verbunden ist, wobei der Rechner (20) konfiguriert ist, um mindestens ein aus dem Sensor (15) stammendes Objekt zu verarbeiten,
**dadurch gekennzeichnet, dass** der Rechner nach Anspruch 13 oder 14 ist.

**Claims**

1. A method for training synaptic weight values of at least one layer (CT1, CT2, CT3) of an artificial neural network (RN), each artificial neuron (22) of a respective layer (CT1, CT2, CT3) being adapted to perform a weighted sum of input value(s) and then to apply an activation function to the weighted sum to provide an output value, each input value being received from a respective element connected to an input of said neuron (22) and multiplied by a synaptic weight associated with the connection between said neuron (22) and the respective element, the respective element being an input variable of the neural network (RN) or a neuron of a preceding layer of the neural network (RN).

   the method being computer-implemented and comprising the following step:

   - training (210) the weight values of the neural network (RN) from training data, each weight value obtained from said training being a quantized weight value belonging to a set of quantized values;

   the quantified values being included in a predefined interval, also called quantization interval, the quantization interval being chosen from the interval [-1-P; 1] and the interval [-1; 1], where P is a quantization step between two successive quantized values;

   wherein the set of quantized values consists of values encoded with a predefined number B of bits, and with the quantization step P satisfying:

$$P = \frac{1}{\left\lfloor \frac{2^B - 1}{2} \right\rfloor}$$

where $\lfloor . \rfloor$ represents the integer part function; and
wherein the activation function is applied according to the following equation:

$$A(Q) = \frac{\alpha_2}{I_2} * round\left(\frac{I_2}{\alpha_2}\frac{\alpha_1}{I_1}Y\frac{1}{\left\lfloor\frac{I_w}{2}\right\rfloor} * clip\left((Q * n) + \frac{\beta}{Y}\frac{I_1}{\alpha_1}\left\lfloor\frac{I_w}{2}\right\rfloor; 0; \frac{I_2}{Y}\frac{I_1}{\alpha_1}\left\lfloor\frac{I_w}{2}\right\rfloor\right)\right)$$

where A represents a global activation function for the fusion of a convolution layer and a subsequent batch normalisation layer;

Q are the weights belonging to the interval $\left[-\left\lfloor\frac{I_w}{2}\right\rfloor, \left\lfloor\frac{I_w}{2}\right\rfloor\right]$,

$I_1$ is an integer equal to $2^{Bc}$-1, with Bc representing a predefined number of bits used for encoding the previous batch normalisation layer;
$I_2$ is an integer equal to $2^{Bn}$-1, with Bn representing a predefined number of bits used for encoding the current batch normalisation layer;
$I_w$ is an integer equal to $2^{Bw}$-1, with Bw representing a predefined number of bits used for encoding the weights of the convolution layer; n is an integer, corresponding to the output of the rounding operation of the previous layer;
β and Y are parameters of the current batch normalization layer;
$\alpha_1, \alpha_2$ are parameters of the clip activation function defined below, $\alpha_1$ being associated with the activation function of the previous batch normalization layer and $\alpha_2$ with that of the current batch normalization layer;

$\lfloor . \rfloor$ represents the integer part function;
round represents a rounding operation;
clip represents an activation function that satisfies the following equation:

$$clip(x; 0; \alpha_i) = \frac{1}{2}(|x| - |x - \alpha_i| + \alpha_i)$$

2. The method according to claim 1, wherein the set of quantized values includes the null value.

3. The method according to claim 1 or 2, wherein the set of quantized values satisfies the following equation:

$$EQA = \{-1 - P + i \cdot P ; i \in [0; 2^B - 1]\} = \{i \cdot P ; i \in [-2^{B-1}; 2^{B-1} - 1]\}$$

the quantization interval being then equal to the interval [-1-P; 1].

4. The method according to claim 1 or 2, wherein the set of quantized values satisfies the following equation:

$$EQS = \{-1 + i \cdot P ; i \in [0; 2^B - 2]\} = \{i \cdot P ; i \in [-(2^{B-1} - 1); 2^{B-1} - 1]\}$$

the quantization interval being then equal to the interval [-1; 1].

5. The method according to any one of the preceding claims, wherein the method further comprises the following step:

- initial training (200) of the weight values of the neural network (RN) from the training data, each learned weight value being furthermore converted, via a transpose function, into a bounded weight value belonging to a predefined interval, also called bounding interval;
the training step (210) being carried out after the initial training step (200) and from the bounded weight values obtained during the initial training; the initial training step (200) forming a first training of the neural network, and the training step (210) forming a second training of the neural network, subsequent to the first training;
the bounding interval preferably being equal to the quantization interval.

6. The method according to claim 5, wherein the transpose function satisfies the following equation:

$$F_{CA}(W_{i,j}) = \left(1 + \frac{P}{2}\right) \cdot \left(\frac{\tan h(W_{i,j})}{\max_{r,s}|\tan h(W_{r,s})|}\right) - \frac{P}{2}$$

where $F_{CA}$ represents a first transpose function, also called asymmetric transpose function;
$W_{i,j}$ represents a weight value from a matrix W of weight values;
P represents the quantization step;
tanh represents the hyperbolic tangent function;
|.| represents the absolute value function;
$\lfloor \cdot \rfloor$ represents the integer part function;
max represents the maximum function;
the quantization interval being then equal to the interval [-1-P; 1].

7. The method according to claim 5, wherein the transpose function satisfies the following equation:

$$F_{CS}(W_{i,j}) = \frac{\tan h(W_{i,j})}{\max_{r,s}|\tan h(W_{r,s})|}$$

where $F_{CS}$ represents a second transpose function, also called symmetric transpose function;
$W_{i,j}$ represents a weight value from a matrix W of weight values;
tanh represents the hyperbolic tangent function;
|.| represents the absolute value function;
max represents the maximum function;
the quantization interval being then equal to the interval [-1; 1].

8. The method according to any of the preceding claims, wherein in the training step, each trained weight value is converted via a quantization function into the respective quantized weight value belonging to the quantization interval;

the quantization function preferably satisfying the following equation:

$$F_Q(W) = P \cdot round\left(\frac{W}{P}\right)$$

where $F_Q$ represents the quantization function;
W represents a respective weight value;
P represents the quantization step; and
round a rounding operation.

9. The method according to any of the preceding claims, wherein the predefined number B of bits is less than or equal to 8;
the predefined number of bits B preferably being between 3 and 5.

10. The method according to any of the preceding claims, wherein the artificial neural network (RN) is configured to process, in particular to classify, data;
the artificial neural network (RN) being preferably configured to be implemented by an electronic calculator (20) connected to a sensor (15), for processing at least one object from the sensor (15).

11. A method for processing data, in particular for classifying data, the method being implemented by an electronic calculator (20) implementing an artificial neural network (RN), the method comprising:

- a training phase (100) for the artificial neural network (RN), and
- an inference phase (150) of the artificial neural network (RN), during which data received at the input of the electronic calculator (20) are processed, in particular classified, via the artificial neural network (RN), previously trained during the training phase (100),

**characterised in that** the training phase (100) is performed by implementing a training method according to any of claims 1 to 10.

12. A computer program comprising software instructions which, when executed by a computer, implement a training method according to any one of claims 1 to 10.

13. An electronic calculator (20) for processing data, in particular for classifying data, via the implementation of a network (RN) of artificial neurons (22), each artificial neuron (22) of a respective layer (CT1, CT2, CT3) of the neural network (RN) being adapted to perform a weighted sum of input value(s) and then to apply an activation function to the weighted sum to provide an output value, each input value being received from a respective element connected to an input of said neuron (22) and multiplied by a synaptic weight associated with the connection between said neuron (22) and the respective element, the respective element being an input variable of the neural network (RN) or a neuron of a preceding layer of the neural network,

the calculator (20) comprising:

- an inference module (30) configured to infer the previously trained artificial neural network (RN), for the processing, in particular the classification, of data received at input of the electronic calculator (20),

wherein the previously trained artificial neural network (RN) is obtained from a computer program according to claim 12; and
wherein the activation function is applied according to the following equation:

$$A(Q) = \frac{\alpha_2}{I_2} * round\left(\frac{I_2}{\alpha_2}\frac{\alpha_1}{I_1}\Upsilon\frac{1}{\left\lfloor\frac{I_w}{2}\right\rfloor} * clip\left((Q*n) + \frac{\beta}{\Upsilon}\frac{I_1}{\alpha_1}\left\lfloor\frac{I_w}{2}\right\rfloor; 0; \frac{I_2}{\Upsilon}\frac{I_1}{\alpha_1}\left\lfloor\frac{I_w}{2}\right\rfloor\right)\right)$$

where A represents a global activation function for the fusion of a convolution layer and a subsequent batch normalisation layer;

Q are the weights belonging to the interval $\left[-\left\lfloor\frac{I_w}{2}\right\rfloor, \left\lfloor\frac{I_w}{2}\right\rfloor\right]$,

$I_1$ is an integer equal to $2^{Bc}-1$, with Bc representing a predefined number of bits used for encoding the previous batch normalisation layer;
$I_2$ is an integer equal to $2^{Bn}-1$, with Bn representing a predefined number of bits used for encoding the current batch normalisation layer;
$I_w$ is an integer equal to $2^{Bw}-1$, with Bw representing a predefined number of bits used for encoding the weights of the convolution layer; n is an integer, corresponding to the output of the rounding operation of the previous layer;
$\beta$ and $\Upsilon$ are parameters of the current batch normalization layer;
$\alpha_1, \alpha_2$ are parameters of the clip activation function defined below, $\alpha_1$ being associated with the activation function of the previous batch normalization layer and $\alpha_2$ with that of the current batch normalization layer;

$\lfloor . \rfloor$ represents the integer part function;
round represents a rounding operation;
clip represents an activation function that satisfies the following equation:

$$clip(x; 0; \alpha_i) = \frac{1}{2}(|x| - |x - \alpha_i| + \alpha_i)$$

14. A calculator (20) according to claim 13, wherein the inference module (30) is configured to perform the weighted sum of input value(s) and then apply the activation function to the weighted sum via integer and/or fixed-point operators and integer and/or fixed-point registers;

the registers being preferably registers of up to 8 bits;

the trained quantized weight values being preferably multiplied by an integer multiple equal to $\left\lfloor\frac{2^B-1}{2}\right\rfloor$ for the

inference of the neural network, with B representing the predefined number of bits used for encoding the quantized weight values and $\lfloor . \rfloor$ representing the integer part function.

15. An electronic system (10) for processing object(s), comprising a sensor (15) and an electronic calculator (20) connected to the sensor (15), the calculator (20) being configured to process at least one object from the sensor (15), **characterized in that** the calculator is according to claim 13 or 14.

FIG.1

$$\frac{1}{a}$$

$$\frac{2}{a}$$

$$1*\frac{2}{a}+\frac{1}{a}$$

$$2*\frac{2}{a}+\frac{1}{a}$$

$$3*\frac{2}{a}+\frac{1}{a}$$

$$\frac{2}{a}$$

$$\cdots$$

$$7*\frac{2}{a}+\frac{1}{a}$$

-1          0          1

# FIG.2
# (ART ANTERIEUR)

# FIG.3

EQA

$$0 * \frac{1}{a}$$

$$1 * \frac{1}{a}$$

$$\frac{1}{a}$$

$$2 * \frac{1}{a}$$

$$3 * \frac{1}{a}$$

$$\frac{1}{a}$$

$$\cdots$$

$$-7 * \frac{1}{a} \quad -\frac{1}{a}$$

$$7 * \frac{1}{a}$$

-1          0          1

EQS

$$0 * \frac{1}{a}$$

$$1 * \frac{1}{a}$$

$$\frac{1}{a}$$

$$2 * \frac{1}{a}$$

$$3 * \frac{1}{a}$$

$$\frac{1}{a}$$

$$\cdots$$

$$7 * \frac{1}{a}$$

-1          0          1

100

Apprentissage du réseau de neurones artificiels          200

Premier apprentissage des valeurs de poids

210

Deuxième apprentissage des valeurs de poids, parmi un ensemble de valeurs quantifiées et à partir de valeurs bornées de poids, obtenues lors du premier apprentissage

150

Inférence du réseau de neurones artificiels

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. JACOB**. *Quantization and Training of Neural Networks for Efficient Integer-Arithmetic-Only Inference*
- **Q. JIN**. *Towards Efficient Training for Neural Network Quantization*
- **S. ZHOU**. *DoReFa-Net: Training Low Bitwidth Convolutional Neural Networks with Low Bitwidth Gradients*